# EUROPÄISCHE PATENTSCHRIFT

(11) **EP 2 481 569 B1**
(45) Veröffentlichungstag und Bekanntmachung des Hinweises auf die Patenterteilung: **25.06.2014**
(21) Anmeldenummer: 12150285.0
(22) Anmeldetag: 05.01.2012
(51) Int. Cl.: B32B 15/14, B62D 29/00

(54) **Kraftfahrzeugbauteil und Verfahren zur Herstellung des Kraftfahrzeugbauteils**
Motor vehicle component and method for manufacturing same
Composant de véhicule automobile et procédé de fabrication du composant de véhicule automobile

(30) Priorität: 31.01.2011 DE 102011009892
(43) Veröffentlichungstag der Anmeldung: 01.08.2012
(73) Patentinhaber: Benteler SGL GmbH & Co. KG, 33102 Paderborn (DE)
(72) Erfinder: Howe, Christian, Dr., AT-4910 Ried im Innkreis (AT); Böke, Johannes, Dr., 32825 Blomberg (DE); Maciej, Marko, Dr., 33104 Paderborn (DE)
(74) Vertreter: Ksoll, Peter

(56) Entgegenhaltungen:
- DATABASE WPI Week 198711 Thomson Scientific, London, GB; AN 1987-076547 XP002670635, & JP 62 030177 A (NITTO ELECTRIC IND CO) 9. Februar 1987 (1987-02-09)
- DATABASE WPI Week 200944 Thomson Scientific, London, GB; AN 2009-K61775 XP002670636, & WO 2009/078389 A1 (NIPPON ZEON KK) 25. Juni 2009 (2009-06-25)

## Beschreibung

Die vorliegende Erfindung betrifft ein Verfahren zur Herstellung eines Kraftfahrzeugbauteils gemäß Patentanspruch 1.

Es ist bekannt, Karosserie- und/oder Fahrwerksbauteile in Hybridbauweise herzustellen, das heißt einen metallischen Grundkörper mit einem faserverstärkten Verbundwerkstoff so bereichsweise zu verstärken, um leichte Strukturen mit verbessertem Crashverhalten kostengünstig herzustellen. Neben den mechanischen und klebetechnischen Verfahren sind auch Möglichkeiten des direkten formschlüssigen Verspritzens bekannt.

Die Herstellung von Hybridbauteilen ist fertigungstechnisch relativ aufwendig, da die einzelnen Bauteile hergestellt und anschließend miteinander verbunden werden müssen. Insbesondere bei Verwendung von Faserverbundwerkstoffen sind Aushärtezeiten und Klebezeiten zu berücksichtigen, welche sich in der Fertigung negativ auf die Taktzeit des Produktionsprozesses auswirken.

Weiterhin sind aufwendige Reinigungsprozesse und/oder Arbeitsvorbereitungsprozesse zur Herstellung von einer Koppelung von metallischen Bauteilen mit Faserverbundbauteilen notwendig.

Aus dem Stand der Technik sind verschiedene Verfahren zur Herstellung von Hybridbauteilen bekannt. So ist beispielsweise aus der DE 1 959 277 A1 ein Verfahren zum Koppeln von Geweben mit Glasfasern mit einem Trägermaterial aus Stahl bekannt. Hierzu wird zunächst auf das Trägermaterial aus Stahl eine Matte oder ein Vlies aus Stahlfasern mit Hilfe eines Schweiß- oder Lötverfahrens, also mit Hilfe eines thermischen Fügeverfahrens, stoffschlüssig gekoppelt. Auf die Matte oder das Vlies aus Stahlfasern wird dann eine Matte oder ein Gewebe aus Glasfasern aufgelegt und mit Harz getränkt. Das Harz greift dann formschlüssig in die Matte oder das Vlies aus Stahlfasern ein und verbindet die Matte oder das Vlies aus Stahlfasern mit der Matte oder dem Gewebe aus Glasfasern formschlüssig. Somit wird eine indirekte Koppelung von einem metallischen Trägermaterial mit einem Faserverbundwerkstoff hergestellt. Insbesondere bei der Herstellung von dreidimensional geformten Bauteilen ergeben sich aufgrund des Anlegens bzw. Anformens der Stahlfasern mit anschließendem thermischem Fügeverfahren Grenzen bei der Formgebung. Aus der JP 62030177 A und aus der WO 2009/078389 A1 sind jeweils Herstellungsverfahren bekannt, bei denen ein metallisches Bauteil mit einer Lage Faserverbundwerkstoff verstärkt wird.

Mit den bekannten Verfahren hergestellte Hybridbauteile weisen eine erhöhte Festigkeit und Steifigkeit. Nachteilig bei bisher bekannten Koppelungsmethoden ist, dass beispielsweise beim Kleben oder Ausschäumen der zwei zu verbindenden Bauteile ein nicht gleichmäßiger Fügespalt eingehalten ist. Weiterhin können sich Bauteiltoleranzen zwischen den zwei zu fügenden Komponenten negativ auf die Verbindung auswirken, da beispielsweise ungenügende Anbindungen oder aber auch Spalte zwischen den Bauteilen verbleiben. Diese können weiterhin im Falle einer Kraftfahrzeugkarosserie zu unnötiger Korrosion führen. Im Crashfall kann es zu Faserbrüchen kommen, so dass die Crashsicherheit bei Überschreiten eines Kraftniveaus nicht mehr gegeben ist.

Aufgabe der vorliegenden Erfindung ist es daher, ein Hybridbauteil herzustellen, bei dem die Gesamtsteifigkeit und Gesamtfestigkeit gleichzeitig erhöht sind und das eine spaltfreie Koppelung unterschiedlicher Werkstoffpaarungen aufweist.

Diese Aufgabe wird mit den Merkmalen im Patentanspruch 1 gelöst.

Vorteilhafte Ausführungen und Weiterbildungen der vorliegenden Erfindung sind Bestandteil der abhängigen Patentansprüche.

Die vorliegende Erfindung betrifft ein Verfahren zur Herstellung eines Kraftfahrzeugbauteils, aufweisend einen metallischen Grundkörper und ein mit dem Grundkörper gekoppeltes Verstärkungselement aus Faserverbundwerkstoff mit folgenden Verfahrensmerkmalen:
- Bereitstellen eines dreidimensional ausgebildeten Grundkörpers
- Herstellen eines Stacks durch Aufeinanderlegen verschiedener Faserwerkstofflagen
- Aufbringen eines Matrixharzfilmes auf den Stack
- Aufbringen eines Vlies auf den Matrixharzfilm
- Anformen des Stacks an einen zu verstärkenden Bereich des Grundkörpers, wobei der Stack mit dem Grundkörper während des Anformens oder nach dem Anformen verpresst wird.
- Aushärten des Kraftfahrzeugbauteils.

Der Stack wird erfindungsgemäß durch mindestens eine Lage Faserwerkstoff, vorzugsweise Fasergewebe gebildet. Erfindungsgemäß können es aber auch mehrere Lagen sein, die übereinander gestapelt sind. Bei dem erfindungsgemäßen Herstellungsverfahren des Kraftfahrzeugbauteils wird zunächst ein dreidimensional ausgebildeter Grundkörper, vorzugsweise als Blechbauteil aus metallischem Werkstoff bereitgestellt. Weiterhin wird ein Stack bereitgestellt, auf den ein Matrixharzfilm aufgebracht wird. Der Stack selber kann wiederum aus Prepreg-Material bestehen. Dieser Matrixharzfilm wird an der mit dem Grundkörper zu koppelnden Seite des Stacks aufgebracht.

Auf den Matrixharzfilm selber wird wiederum ein Vlies gelegt, so dass es zu keinerlei Verunreinigungen sowohl des Matrixharzfilmes oder aber auch durch Herabtropfen des Matrixharzes kommt. Der Stack, der sich zu diesem Zeitpunkt des Verfahrens maßgeblich noch in einer ebenen Form befindet, beispielsweise in Form einer Lage, wird nun an die zu verstärkenden Bereiche des Grundkörpers angeformt. Hierbei kommt es durch das Anformen zu einem Fließen bzw. Diffundieren des Matrixharzfilmes durch das Vlies. Der Matrixharzfilm geht dann eine Verbindung mit dem Grundkörper ein.

Die bevorzugte Ausführungsvariante des Stacks besteht dabei aus einem Aufbau mit einem Klebefilm, einem Prepreg-Material und einer Schutzfolie. Die Schutzfolie ist hierbei auf der dem dreidimensional ausgebildeten metallischen Grundkörper abgewandten Seite angebracht. Die Schutzfolie ermöglicht es, dass Werkzeuge oder aber andere im Produktionsprozess befindliche Gegenstände oder Körper keinen Kontakt mit der Faserverbundwerkstoffverstärkung haben. Die Schutzfolie kann bei, während und nach dem Aushärten entweder abgezogen werden oder aber im Bauteil verbleiben. Der Klebefilm besteht dabei aus einem Klebeharz mit Eigenschaften eines im Karosseriebau üblich eingesetzten crashstabilen Strukturklebstoffes sowie einem Trägermaterial des Klebstoffes bzw. des Klebefilms, das unter Einwirkung von Druck und/oder Temperatur von dem Klebeharz durchdrungen werden kann, so dass es mit der zu koppelnden Oberfläche eine Verbindung eingeht. Hierbei kann insbesondere durch die Dicke des Trägermaterials ebenfalls die Dicke der Klebeschicht eingestellt werden.

Insbesondere können im Rahmen der Erfindung Faserverbundwerkstoffe aus Kohle-, Glas- oder aber Basaltfasern eingesetzt werden. Darüber hinaus können auch metallische Fasern eingesetzt werden sowie ein Epoxid-Matrix-Harz.

Besonders vorteilig bei dem erfindungsgemäßen Verfahren ist, dass Faseranteile aus einer Kombination der zuvor genannten Fasermöglichkeiten beliebig zusammengesetzt werden können. Durch den Einsatz von Gewebe-Prepregs, DU-Prepregs und/oder Gelege-Prepregs (biaxial oder multiaxial) ist es möglich, die an die jeweiligen Einsatzgebiete und auch Crasheigenschaften geforderten Anforderungen durch Wahl des Prepreg-Materials anzupassen. Im Rahmen des erfindungsgemäßen Verfahrens ist es auch vorgesehen, dass der Stack bzw. der Faserverbundwerkstoff in einer Kalandriereinheit durch Aufeinanderstapeln der einzelnen Lagen vorbereitet wird. Hierbei wird beispielsweise zunächst eine Schutzfolie angeordnet, dann verschiedene Prepreg-Lagen und zum Schluss ein Klebefilm und beispielsweise ein Vliesmaterial aufeinander gestapelt. Ein weiterer Vorteil des erfindungsgemäßen Verfahrens ist, dass durch die Wahl von unterschiedlich breiten Prepreg-Fasern oder aber Prepreg-Rollen der Stack mit unterschiedlichen Wanddicken hergestellt werden kann. Diese Wanddicken können dann unter gewichts- und auch belastungsoptimierten Anforderungen angeordnet und ausgewählt sowie hergestellt werden.

Im weiteren Stadium des erfindungsgemäßen Verfahrens wird der Stack an den Grundkörper gekoppelt und das hergestellte Hybridbauteil härtet derart aus, dass sowohl der mit Matrixharz getränkte Stack und auch die zwischen Stack und Grundkörper hergestellte Matrix-Harz-Verbindung aushärten. Im Rahmen der Erfindung können bei dem Verfahren sowohl laminierte Stacks oder aber auch Prepreg-Materialien zum Einsatz kommen. Der Matrixharzfilm kann im Falle eines verwendeten Prepreg-Materials bereits sich auf der mit dem Grundkörper zu koppelnden Seite des Stacks befinden oder aber beispielsweise durch ein Abreißgewebe auf der zu koppelnden Seite aktiviert werden.

In einer besonders bevorzugten Variante des erfindungsgemäßen Verfahrens wird der Stack mit dem Grundkörper während des Anformens oder nach dem Anformen verpresst. Das Aufbringen des Pressdruckes kann beispielsweise durch mechanisches Pressen oder aber durch pneumatisches oder hydraulisches Pressen erfolgen. Das Pressen kann vollflächig zur gleichen Zeit oder aber auch beispielsweise durch ein inkrementelles Abfahren, beispielsweise mit einer Rolle oder einem Roboterarm erfolgen. Durch den Pressdruck wird nochmals sichergestellt, dass die Verbindung vollflächig, nahezu ohne Sauerstoffeinschlüsse hergestellt wird.

In einer weiteren bevorzugten Ausführungsvariante des erfindungsgemäßen Verfahrens wird der Stack vor dem Anformen vorgeformt. Hierdurch können sich Verfahrensvorteile ergeben, so dass es beispielsweise hier nicht zu einem Verschmieren des Matrixharzes vor oder während des Anformens kommt.

Das erfindungsgemäße Verfahren ist weiterhin dadurch gekennzeichnet, dass das Kraftfahrzeugbauteil während und/oder nach dem Herstellungsverfahren zumindest partiell wärmebehandelt wird. Durch die partielle Wärmebehandlung ergeben sich wiederum besondere Eigenschaften des Matrixharzes bzw. der Aushärtung des Matrixharzes. Beispielsweise ist es mitunter sinnvoll, an bestimmten Bereichen des Grundkörpers durch Vorwärmung ein besseres Fließen des Matrixharzes zu realisieren. Weiterhin können durch eine partielle Wärmebehandlung während und/oder nach dem Herstellungsverfahren verschiedene Härtegrade der herzustellenden Verbindung erreicht werden. Gerade unter Berücksichtigung der mit dem erfindungsgemäßen Herstellungsverfahren erzielten Eigenschaften der Verstärkung des Kraftfahrzeugbauteils, unter Berücksichtigung eines nicht auftretenden Faserbruches ergeben sich besondere Vorteile.

Weitere Vorteile, Merkmale, Eigenschaften und Aspekte der vorliegenden Erfindung ergeben sich aus der folgenden Beschreibung, bevorzugte Ausführungsformen anhand der Figurendarstellung. Diese dienen dem einfachen Verständnis der Erfindung. Es zeigen:
- Figur 1: ein erfindungsgemäßes Kraftfahrzeugbauteil,
- Figur 2: ein erfindungsgemäßes Kraftfahrzeugbauteil während seiner Herstellung,
- Figur 3: ein weiteres erfindungsgemäßes Kraftfahrzeugbauteil in einer anderen Ausführungsvariante,
- Figur 4: das Kraftfahrzeugbauteil aus Figur 3 während seiner Herstellung und
- Figur 5: ein gemäß dem erfindungsgemäßen Verfahren hergestellter Koppelungsbereich in einer Schnittansicht.

In den Figuren werden für gleiche Bauteile dieselben Bezugszeichen verwendet, auch wenn eine wiederholte Beschreibung aus Vereinfachungsgründen entfällt.

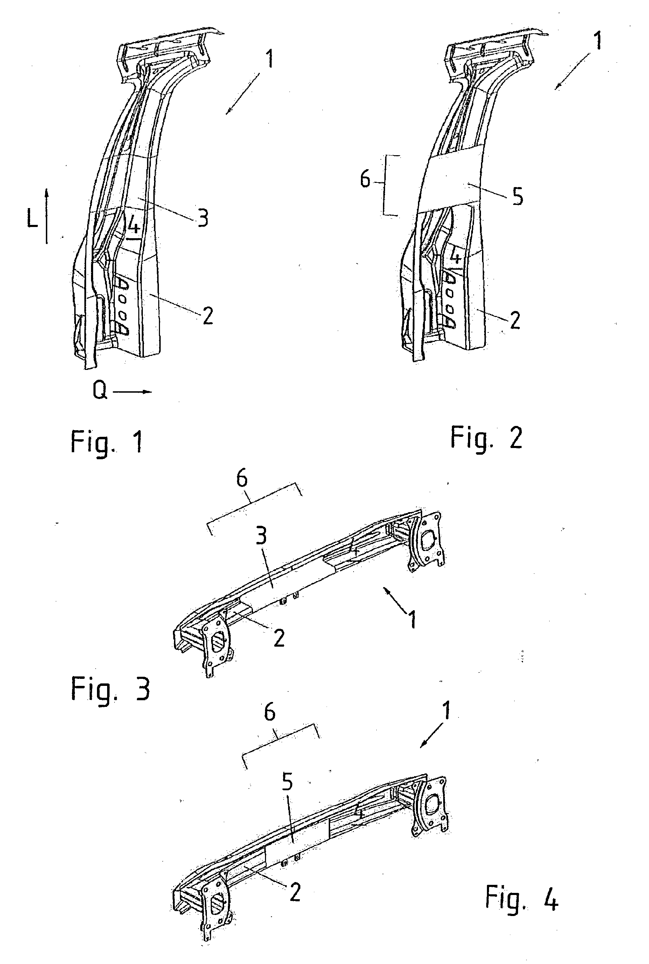

Figur 1 zeigt ein erfindungsgemäßes Kraftfahrzeugbauteil 1 in Form einer B-Säule, welche aus einem metallischen Grundkörper 2 und einem auf dem Grundkörper aufgebrachten Verstärkungselement 3 besteht. Das Verstärkungselement 3 ist auf einer Innenseite 4 an dem Grundkörper 2 angebracht und verstärkt diesen in diesem Bereich. Das Kraftfahrzeugbauteil 1 weist eine Längsrichtung L und eine Querrichtung Q auf.

Figur 2 zeigt das gleiche Kraftfahrzeugbauteil 1 wie Figur 1, jedoch in einem Herstellungsschritt während des erfindungsgemäßen Herstellungsverfahrens. Hierbei wird ein Stack 5 in einem zu verstärkenden Bereich 6 angeordnet. Anschließend wird der Stack 5 in dem zu verstärkenden Bereich 6 angeformt, so dass sich das resultierende Bild ergibt, welches bereits in Figur 1 gezeigt ist. Wenn der Stack 5 mit dem nicht näher dargestellten Matrixharz ausgehärtet ist, ergibt sich dadurch das Verstärkungselement, dass eine stoffschlüssige Verbindung mit dem Grundkörper 2 eingegangen ist.

Figur 3 zeigt eine zweite Ausführungsvariante eines erfindungsgemäßen Kraftfahrzeugbauteils 1 in Form eines Querträgers, wobei auch hier ein zu verstärkender Bereich 6 mit einem Verstärkungselement 3 vollflächig von der Innenseite 4 her gekoppelt ist.

Figur 4 zeigt die zweite Ausführungsvariante des Kraftfahrzeugbauteils 1 während des erfindungsgemäßen Herstellungsverfahrens. Hierbei wird wiederum der Stack 5 an dem zu verstärkenden Bereich 6 angeordnet und anschließend an diesen angeformt, wodurch sich dann nach Aushärten des nicht näher dargestellten Matrixharzes ein erfindungsgemäßes Kraftfahrzeugbauteil 1, bestehend aus Grundkörper 2 und Verstärkungselement 3, ergibt.

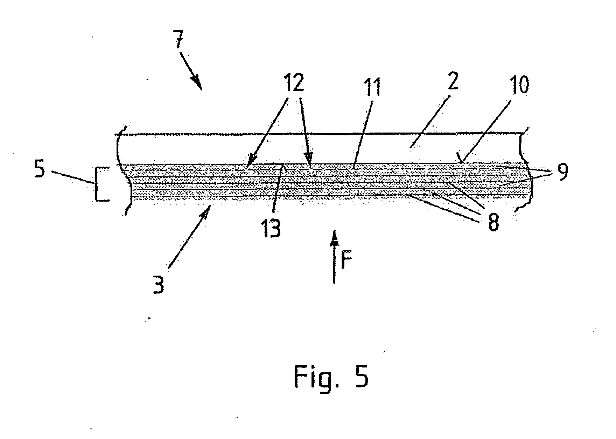

Figur 5 zeigt eine Schnittansicht durch einen mit dem erfindungsgemäßen Verfahren hergestellten Koppelungsbereich 7. Hierbei ist der Grundkörper 2 mit dem Verstärkungselement 3 vollflächig gekoppelt. Das Verstärkungselement 3 besteht dabei aus mehreren Faserwerkstofflagen 8, die aufeinander gelegt sind. Zwischen den Faserwerkstofflagen 8 befindet sich Matrixharz 9, das nach Aushärten zu dem Faserverbund führt. Zwischen dem Grundkörper 2 und der dem Grundkörper 2 zugewandten Seite 10 des Verstärkungselementes 3 befindet sich ein Vlies 11. Das Vlies 11 weist Öffnungen 12 auf, durch die das Matrixharz 9 hindurch tritt. Das durch die Öffnung 12 hindurch getretene Matrixharz 9 geht dann eine stoffschlüssige Verbindung mit der Oberfläche 13 des Grundkörpers 2 ein. Durch eine zusätzlich gezeigt Kraft F ist es möglich, mehr Matrixharz 9 durch das Vlies 11 treten zu lassen bzw. durch den Abpressdruck der Kraft F die stoffschlüssige Verbindung zwischen dem Verstärkungselement 3 und dem Grundkörper 2 in ihrer Stärke zu erhöhen.

### Bezugszeichen:

1 - Kraftfahrzeugbauteil
2 - Grundkörper
3 - Verstärkungselement
4 - Innenseite
5 - Stack
6 - zu verstärkender Bereich
7 - Koppelungsbereich
8 - Faserwerkstofflage
9 - Matrixharz
10 - Seite zu 3
11 - Vlies
12 - Öffnung
13 - Oberfläche zu 2

F - Kraft
L - Längsrichtung
Q - Querrichtung

## Patentansprüche

1. Verfahren zur Herstellung eines Kraftfahrzeugbauteils (1), wobei das Kraftfahrzeugbauteil (1) einen metallischen Grundkörper (2) und ein mit dem Grundkörper (2) gekoppeltes Verstärkungselement (3) aus Faserverbundwerkstoff aufweist, mit folgenden Verfahrensmerkmalen:
- Bereitstellen eines dreidimensional ausgebildeten Grundkörpers (2)
- Herstellen eines Stacks (5) durch Aufeinanderlegen verschiedener Faserwerkstofflagen (8)
- Aufbringen eines Matrixharzfilmes auf den Stack (5)
- Aufbringen eines Vlies (11) auf den Matrixharzfilm
- Anformen des Stacks (5) an einen zu verstärkenden Bereich (6) des Grundkörpers (2), wobei der Stack (5) mit dem Grundkörper (2) während des Anformens oder nach dem Anformen verpresst wird
- Aushärten des Kraftfahrzeugbauteils (1)

2. Verfahren nach Anspruch 1, **dadurch gekennzeichnet, dass** der Stack (5) vor dem Anformen vorgeformt wird.

3. Verfahren nach einem der Ansprüche 1 oder 2, **dadurch gekennzeichnet, dass** das Kraftfahrzeugbauteil während und/oder nach dem Herstellungsverfahren zumindest partiell wärmebehandelt wird.

4. Verfahren nach einem der Ansprüche 1 bis 3, **dadurch gekennzeichnet, dass** zur Herstellung des Stacks (5) eine Schutzfolie bereitgestellt wird, auf die die Faserwerkstofflagen (8) gelegt werden.

## Claims

1. Method for manufacturing a motor vehicle component (1), the motor vehicle component (1) comprising a metallic base body (2) and a reinforcement element (3) made of fibre composite and coupled to the base body (2), the method having the following features:
- preparing a three-dimensional base body (2)
- producing a stack (5) by placing different layers (8) of fibre material on one another
- placing a matrix resin film on the stack (5)
- placing a non-woven (11) on the matrix resin film
- moulding the stack (5) onto a region (6) of the base body (2) that is to be reinforced, the stack (5) being compressed with the base body (2) during or after the moulding
- curing the motor vehicle component (1).

2. Method according to claim 1, **characterised in that** the stack (5) is preformed before the moulding step.

3. Method according to one of claims 1 or 2, **characterised in that** the motor vehicle component is at least partially heat-treated before and/or after the manufacturing process.

4. Method according to one of claims 1 to 3, **characterised in that** to produce the stack (5) a protective film is prepared on which the layers (8) of fibre material are placed.

## Revendications

1. Procédé de fabrication d'un composant de véhicule automobile (1), le composant de véhicule automobile (1) présentant un corps de base (2) métallique et un élément de renforcement (3) couplé au corps de base (2) en matériau renforcé par des fibres, avec les caractéristiques de procédé suivantes :
- mise à disposition d'un corps de base (2) réalisé en trois dimensions
- établissement d'une pile (5) par superposition de différentes couches de matériau renforcé par des fibres (8)
- application d'un film de résine matricielle sur la pile (5)
- application d'un non-tissé (11) sur le film de résine matricielle
- formation de la pile (5) sur une zone (6) à renforcer du corps de base (2), la pile (5) étant pressée avec le corps de base (2) pendant ou après la formation
- durcissement du composant de véhicule automobile (1).

2. Procédé selon la revendication 1, **caractérisé en ce que** la pile (5) est préformée avant la formation.

3. Procédé selon l'une quelconque des revendications 1 ou 2, **caractérisé en ce que** le composant de véhicule automobile est traité thermiquement au moins partiellement pendant et/ou après le procédé de fabrication.

4. Procédé selon l'une quelconque des revendications 1 à 3, **caractérisé en ce qu'**un film de protection est mis à disposition pour l'établissement de la pile (5), sur lequel les couches de matériau renforcé par des fibres (8) sont placées.
